# EUROPÄISCHE PATENTSCHRIFT

(11) **EP 2 215 378 B1**
(45) Veröffentlichungstag und Bekanntmachung des Hinweises auf die Patenterteilung: **02.03.2011**
(21) Anmeldenummer: 08843312.3
(22) Anmeldetag: 09.10.2008
(51) Int. Cl.: F16F 15/315, F16D 3/06

(54) **DREHMOMENTÜBERTRAGUNGSEINRICHTUNG**
TORQUE TRANSMISSION DEVICE
DISPOSITIF DE TRANSMISSION D'UN COUPLE DE ROTATION

(30) Priorität: 25.10.2007 DE 102007051070
(43) Veröffentlichungstag der Anmeldung: 11.08.2010
(73) Patentinhaber: Schaeffler Technologies GmbH & Co. KG, 91074 Herzogenaurach (DE)
(72) Erfinder: SZIKRAI, Szabolcs, 77815 Bühl (DE); HORVATH, Istvan, 77815 Bühl (DE); FIDLIN, Alexander, 76149 Karlsruhe (DE)
(86) Internationale Anmeldenummer: PCT/DE2008/001664
(87) Internationale Veröffentlichungsnummer: WO 2009/052784

(56) Entgegenhaltungen:
- EP-A- 0 903 511
- JP-A- 60 088 244
- JP-A- 61 233 242
- JP-A- 2003 214 496

## Beschreibung

Die Erfindung betrifft eine Drehmomentübertragungseinrichtung vorzugsweise im Drehmomentfluss zwischen einer Brennkraftmaschine und einem Getriebe mit einer axial elastischen Anbindung an die Kurbelwelle der Brennkraftmaschine.

Durch die zyklisch in Abhängigkeit von der Zylinderanzahl in Brennkraftmaschinen stattfindenden Gasreaktionen wird die Kurbelwelle ungleichmäßigen Druckbelastungen ausgesetzt, die zu Axial- und Taumelschwingungen der Kurbelwelle führen. Demzufolge werden Drehmomentübertragungseinrichtungen wie Reibungskupplungen, Hydrodynamische Drehmomentwandler, Zweimassenschwungräder mit gegebenenfalls integrierter Reibungskupplung und dergleichen axial elastisch an die Kurbelwelle angebunden. Hierzu wird ein axial elastisches, vergleichsweise dünnes Scheibenteil an der Kurbelwelle angeschraubt, ein die Verbindung zu einem nachfolgenden Getriebe herstellendes Übertragungsteil wird radial außen befestigt. Durch die dünne Ausgestaltung des Scheibenteils erfolgt eine axial elastische und die Axial- und Taumelschwingungen ausgleichende Anbindung an die Kurbelwelle. Zur Verstärkung der Befestigung des Scheibenteils werden Verstärkungsbleche vorgeschlagen, die einseitig oder beidseitig des Scheibenteils angeordnet sein können.

Im Laufe der Lebensdauer derartiger Drehmomentübertragungseinrichtungen kann es vorkommen, dass es insbesondere an den Übergängen zwischen Verstärkungsblechen und Scheibenteilen zu Ermüdungsrissen im Scheibenteil kommt, da besonders an dieser Biegelinie bei Auftreten von Axialschwingungen eine besonders hohe Materialbelastung auftritt.

Eine gattungsgemäße Drehmomentübertragungseinrichtung ist aus JP-A-2003 214 496 bekannt.

Aufgabe der Erfindung ist daher, die Materialbelastung an dieser Stellung zu verringern oder zu eliminieren.

Die Aufgabe wird durch eine Drehmomentübertragungseinrichtung mit einem drehfest mit einer Kurbelwelle einer Brennkraftmaschine verbundenen axial elastischen Scheibenteil und einem radial außerhalb drehfest an dem Scheibenteil aufgenommenen Übertragungsteil gelöst, wobei das Scheibenteil axial mit der Kurbelwelle verspannt verbunden ist. Durch eine axial verspannte Aufnahme des Scheibenteils auf der Kurbelwelle wird die Biegelinie delokalisiert auf einen weiten Bereich, so dass keine Materialermüdungen infolge der Lokalisierung auf einen beispielsweise engen Radius knapp außerhalb einer inelastischen Verstärkungsscheibe auftreten. Vielmehr wird das Scheibenteil im Bereich einer durch die Verspannung vorgegebenen Steifigkeit bereits axial elastisch auf der Kurbelwelle aufgenommen, so dass der axiale Federweg nicht nur im Scheibenteil selbst sondern auch zwischen Befestigung, beispielsweise Schrauben, und dem Scheibenteil ausgeglichen werden kann.

Erfindungsgemäß wird zur Stabilisierung der Aufnahme des Scheibenteils auf der Kurbelwelle an beiden Seiten des Scheibenteils jeweils zumindest eine Federscheibe vorgesehen, so dass das Scheibenteil zumindest geringfügig und entgegen der Wirkung der Federscheiben in ihrer Ebene entgegen der Ebene des Aufnahmebereichs der Kurbelwelle verlagerbar sein kann und damit bereits an der Aufnahme des Scheibenteils Axial- und insbesondere Taumelschwingungen zumindest teilweise kompensiert werden können. In vorteilhafter Weise sind die Federscheiben bezüglich ihres Durchmessers größer als der Durchmesser des Aufnahmebereichs der Kurbelwelle für das Scheibenteil, so dass bei entsprechender elastischer Ausbildung der Federscheibe diese während eines Auftretens von Schwingungen elastische Biegebalken bilden, die das Scheibenteil mitnehmen, so dass ein in dem Scheibenteil während der Schwingungen auftretender axialer Weg nicht an einem einzigen Biegeradius sondern über den gesamten Bereich des Biegebalkens der Federscheiben ausgeglichen wird und damit punktuelle beziehungsweise linienförmige Materialbelastungen und Ermüdungsbrüche in diesen Belastungsbereichen vermieden werden können.

Dabei können zur Einstellung einer gewünschten Steifigkeit der Federscheiben diese aus unterschiedlichen Materialien hergestellt sein, die unterschiedliche elastische Eigenschaften aufweisen. Darunter kann auch zu verstehen sein, dass eine ähnliche oder identische makroskopische Zusammensetzung eines Materials, beispielsweise Stahl, gewählt und dieses unterschiedlichen Behandlungen wie Härteprozeduren oder Formgebungsverfahren unterworfen wird, so dass mikroskopisch unterschiedliche Strukturen oder spezielle Formen gebildet werden, die unterschiedliche elastische Eigenschaften aufweisen. Beispielsweise können Federscheiben vorgesehen sein, die Tellerfedern oder Membranfedem sind oder diesen in ihrer Wirkung oder Gestalt ähnlich sind. Vorzugsweise werden Federscheiben verwendet, deren Kontaktfläche zu dem Scheibenteil unter axialer Vorspannung an deren Außenumfang erfolgt, wobei die Kontaktfläche zur Ausbildung einer auch während einer Abwälzung bei Vorliegen von Schwingungen homogenen Kontaktführung beispielsweise gerundet oder ballig ausgeführt sein kann.

Zur Ausbildung spezieller Anwendungen mit einer außen eher weichen Anlagefläche für das Scheibenteil und einer radial nach innen inelastischen Aufnahme auf der Kurbelwelle können mehrere Federscheiben auf einer Seite des Scheibenteils vorgesehen sein, die bezüglich ihres Durchmessers sukzessive abnehmen, so dass am Scheibenteil die Federscheibe mit dem größten Durchmesser anliegt. Es versteht sich, dass auch mehrere Federscheiben mit demselben Durchmesser aneinander angeordnet sein können und nur ein Teil oder nur eine der Federscheiben unter Vorspannung zwischen Kurbelwelle und Scheibenteil verbunden ist. Derartige Anordnungen von Federscheiben unterschiedlichen Durchmessers können auf einer Seite des Scheibenteils oder auf beiden Seiten vorgesehen sein.

Zur Einstellung der Elastizität der Federscheiben können weiterhin unterschiedliche Materialstärken dieser vorgesehen sein. So können beispielsweise eine oder mehrere Federscheiben dicker als die anderen sein. Es hat sich beispielsweise als vorteilhaft gezeigt, wenn die äußere am Scheibenteil angeordnete Federscheibe eine eher geringere Steifigkeit aufweist als auf dieser aufgebrachte Federscheiben mit geringerem Durchmesser, so dass es vorteilhaft sein kann, dies elastischer auszugestalten, indem entsprechende Materialien, Härteverfahren und/oder Materialstärken gewählt werden.

Weiterhin hat sich als vorteilhaft gezeigt, wenn zwischen metallische Federscheiben nicht metallische elastische Elemente eingebracht werden, die dämpfende und/oder geräuschisolierende Eigenschaften aufweisen können. Vorzugsweise können hierzu Gummi-, Kautschuk- oder ähnliche Elastomerelemente verwendet werden, die bezüglich ihrer Dimensionen den Federscheiben angepasst sein können. Auch kann es vorteilhaft sein, wenn diese Elemente zumindest teilweise die axiale Vorspannung zum Scheibenteil übernehmen.

Weiterhin kann vorteilhaft sein, wenn zumindest eine Federscheibe und/oder das Scheibenteil zumindest eine mit einer Schmierkomponente befüllte Öffnung aufweist, wobei die Öffnung von jeweils einer Federscheibe und/oder dem Scheibenteil axial verschlossen wird. Dadurch können in dem Verband Scheibenteil/Federscheiben und gegebenenfalls nichtmetallischen Elementen Kavitäten vorgesehen werden, die Depots für Schmiermittel bilden können, so dass die einzelnen Bauteile untereinander geschmiert werden und damit eine Geräuschisolierung und/oder ein Korrosionsschutz erreicht werden kann. Weiterhin kann ein definierter Reibbeziehungsweise Abwälzkontakt der unter Vorspannung mit dem Scheibenteil stehenden Federscheiben erreicht werden. In vorteilhafter Weise werden die Aussparungen nach radial innen, beispielsweise radial innerhalb oder auf radiale Höhe des Verschraubungskreises des Scheibenteils mit der Kurbelwelle gebracht. Es versteht sich, dass die Anordnung in der Weise erfolgt, dass keine Schwächung des Scheibenteils im Bereich der Aufnahme erfolgt, beziehungsweise eine erfolgende Schwächung toleriert werden kann. Durch die Anordnung radial innen erfolgt eine Zwangsschmierung durch an der Drehmomentübertragungseinrichtung auf tretende Fliehkräfte. Die Viskosität des Schmiermittels wird dabei an diese Fliehkräfte in Verbindung mit den in der Kupplungsglocke und an den betroffenen Bauteilen auftretenden Temperaturen angepasst.

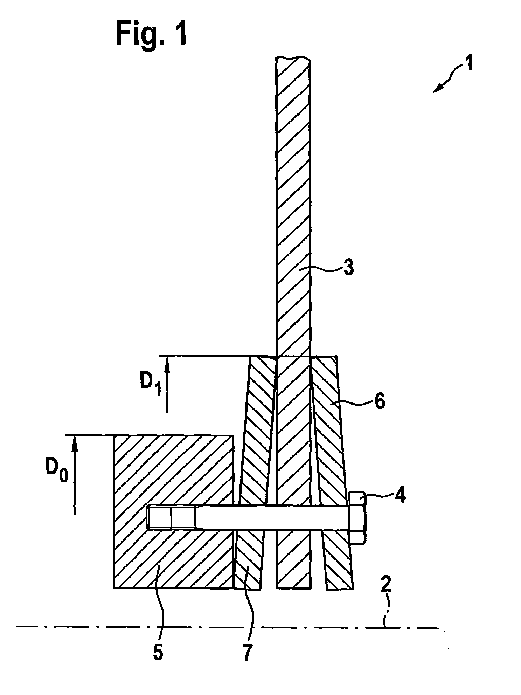

Die Erfindung wird anhand der Figuren 1 bis 4 näher erläutert, die jeweils schematisch vorteilhafte Ausführungsbeispiele im Teilschnitt zeigen.

Figur 1 zeigt eine um eine Drehachse 2 drehende Drehmomentübertragungseinrichtung 1 im bezüglich der Drehachse 2 oberen Halbschnitt. Die Drehmomentübertragungseinrichtung weist ein Scheibenteil 3 auf, das mittels Schrauben 4 an einer Kurbelwelle 5 einer Brennkraftmaschine aufgenommen ist. An seinem äußeren Umfang ist das Scheibenteil 3 nur teilweise dargestellt. Das Scheibenteil 3 kann aus mehren aneinander gelegten dünnen Blechen gebildet sein. Im weiteren Verlauf verfügt das Scheibenteil 3 über Anschlussmittel zur Ausbildung von Verschraubungen, Steck- oder Rastverbindungen, Bajonettverschlüssen oder dergleichen, die trennbar sind, so dass an dieser Stelle ein weiteres Aggregat, das beispielsweise die Verbindung zu einem Getriebe herstellt, vom Scheibenteil getrennt werden kann. Derartige Aggregate können beispielsweise ein Drehmomentwandler oder eine Doppelkupplung für ein Doppelkupplungsgetriebe sein. In anderen Ausführungsbeispielen kann das Scheibenteil 3 fest mit einem zur Aufnahme an der Kurbelwelle 5 vorgesehenen Aggregat, beispielsweise einer Reibungskupplung, einem Zweimassenschwungrad oder einem anderen Typ einer Doppelkupplung, verbunden beispielsweise vernietet oder verschweißt sein. Es versteht sich, dass in besonderen Ausgestaltungsbeispielen die Art der Befestigung von Aggregat und Art des Antriebsstrangs unterschiedlich hierzu ausgestaltet werden kann.

Das Scheibenteil 3 ist auf der Kurbelwelle 5 axial verspannt aufgenommen. Hierzu sind im gezeigten Ausführungsbeispiel beidseitig des Scheibenteils 3 zwei Federscheiben 6, 7 vorgesehen, die konisch ausgebildet sind und die Charakteristik einer Teller- beziehungsweise Membranfeder aufweisen. Die Federscheiben 6, 7 sind mit ihren weiten Enden dem Scheibenteil 3 zugewandt mittels der Schrauben 5 auf der Stirnseite der Kurbelwelle 5 axial verspannt. Es versteht sich, dass die in der Figur 1 dargestellte Drehmomentübertragungseinrichtung 1 zur Verdeutlichung des Effekts überzeichnet dargestellt ist. Je nach Ausgestaltung der Kurbelwelle 5 können Scheibenteil 3 und die Federscheiben 6, 7 eine zentrale Öffnung ausbilden, so dass gegebenenfalls ein Pilotlager in der Kurbelwelle eingebracht werden kann. In diesem Fall sind die Federscheiben ringförmig ausgestaltet. In anderen - nicht dargestellten - Ausgestaltungen können die Federscheiben scheibenförmig ohne zentrale Öffnung ausgeführt sein. Der Durchmesser D₁ der Federscheiben 6, 7 ist größer als der Durchmesser D₀ der Kurbelwelle 5, so dass sich das Scheibenteil 3 an einem größeren Durchmesser axial abstützen kann. Die Steifigkeit der beiden Federscheiben kann gleich oder unterschiedlich eingestellt sein. Beispielsweise können unterschiedliche Materialien, Härteverfahren und/oder Materialstärken für die Federscheiben 6, 7 verwendet werden.

Die in Drehrichtung erforderlichen Übertragungskräfte können durch relative dünne Scheibenteile übertragen werden, so dass die Dicke eines Scheibenteils und damit der erforderliche Materialeinsatz im Wesentlichen von der Belastbarkeit in axiale Richtung beziehungsweise bedingt durch die taumelnde Bewegung der Kurbelwelle 5 abhängt. Durch die axial vorgespannte Befestigung des Scheibenteils 3 auf der Kurbelwelle 5 werden die Axial- und Taumelschwingungen zumindest teilweise bereits innerhalb der Verspannung mit den Federscheiben 6, 7 eliminiert, so dass das Scheibenteil entsprechend dünn, das heißt in geringerer Materialstärke ausgeführt werden kann.

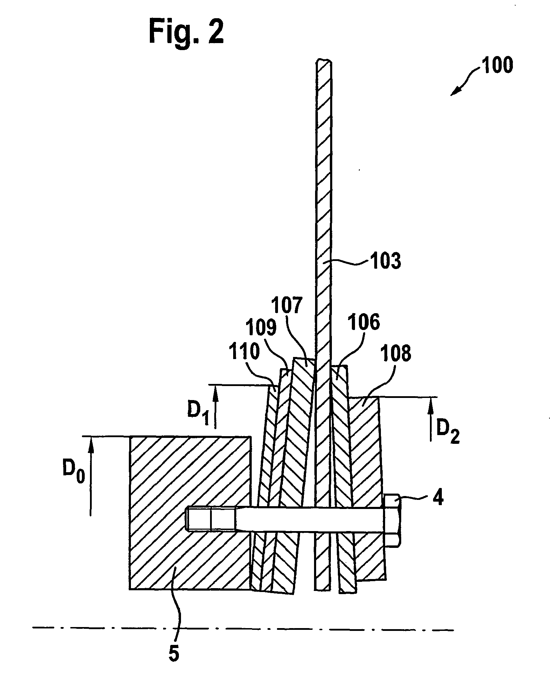

Figur 2 zeigt ein gegenüber der in Figur 1 gezeigten Drehmomentübertragungseinrichtung 1 geänderte Drehmomentübertragungseinrichtung 100 mit mehreren stufenförmig auf beiden Seiten des Scheibenteils 103 angeordneten Federscheiben 106, 107, 108, 109, 110. Durch die stufenförmige Anordnung der Federscheiben 106, 108 auf der der Kurbelwelle 5 abgewandten Seite des Scheibenteils 103 mit einer inelastischen, dicken Federscheibe 108 mit kleinem Durchmesser D₂ und einer mit dem Scheibenteil 103 kontaktierenden Federscheibe größeren Durchmessers erfolgt eine bezüglich des Durchmessers graduelle, nicht lineare Änderung der Steifigkeit. Durch diese Maßnahme kann bei kleinen Auslenkungen des Scheibenteils ein kleinerer und bei großen Auslenkungen ein größerer Widerstand durch die Federscheiben entgegengehalten werden. In gleicher Weise kann eine Dämpfung von Axialschwingungen auf der anderen Seite des Scheibenteils erfolgen. Hier werden drei Federscheiben 107, 109, 110 unterschiedlicher Stärke und stufenförmig abnehmenden Durchmessers verwendet, wobei der Durchmesser D₁ der kleinsten Federscheibe 110 immer noch größer als der Durchmesser D₀ der Kurbelwelle 5 und die an dem Scheibenteil 103 direkt anliegende Federscheibe 107 mit dem größten Durchmesser zugleich die größte Dicke aufweist. Die Ausgestaltung der Anzahl, Dicke und des Durchmessers der Federscheiben richtet sich nach den Eigenschaften der Brennkraftmaschine und den an der radial außen am Scheibenteil 103 aufzunehmenden Aggregaten.

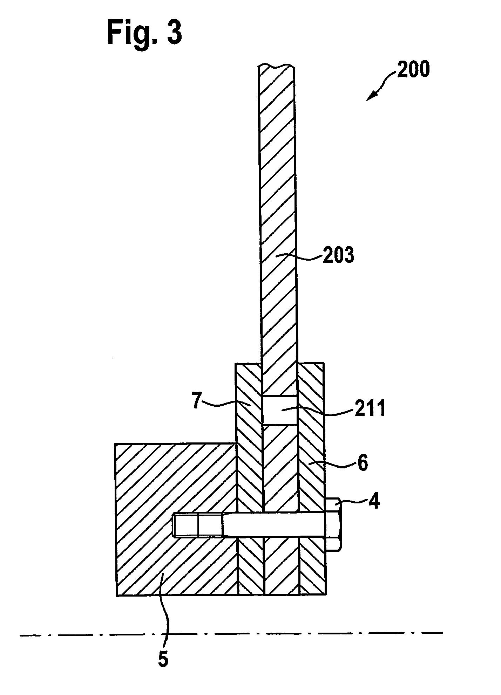

Figur 3 zeigt am Beispiel einer Drehmomentübertragungseinrichtung 200 mit komplett von den Schrauben 4 mit der Kurbelwelle verspannten Federscheiben 6, 7 ein Scheibenteil, das im Bereich der Überdeckung durch die Federscheiben 6, 7 zumindest eine Öffnung 211 aufweist. Die Öffnung 211 ist zumindest teilweise mit einem Dämpfungs- oder Schmiermittel befüllt. Als Dämpfungsmittel kann elastischer Kunststoff, Gummi oder Kautschuk vorgesehen sein. Als Schmiermittel kann Fett oder eine Mischung aus zumindest zwei Komponenten der Bestandteile Fett, Graphit, Molybdänsulfid, Teflon® vorgesehen sein. Es versteht sich, dass mehrere über den Umfang verteilte Öffnungen beispielsweise alternierend sowohl Schmier- als auch Dämpfungsmittel enthalten können.

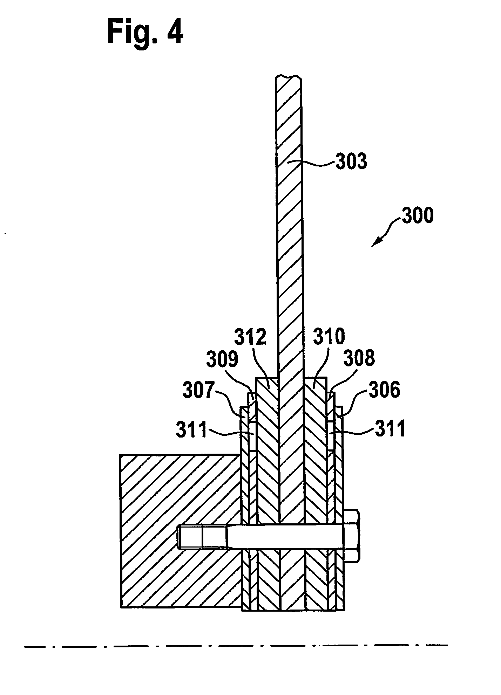

In Abwandlung zu Figur 3 zeigt Figur 4 eine Drehmomentübertragungseinrichtung 300 mit einem das Scheibenteil 303 flankierenden Federscheiben 306, 307, 308, 309, 310, 312, wobei eine auf jeder Seite des Scheibenteils 303 mittlere Federscheibe 308, 309 jeweils zumindest eine Öffnung 311 zur Aufnahme von Schmier- oder Gleitmittel aufweist. In vorteilhafter Weise können eine oder beide Federscheiben 308, 309 selbst aus nichtmetallischem Material, beispielsweise Gummi, Kunststoff, Kautschuk oder dergleichen hergestellt sein, so dass deren dämpfende Wirkung bewirkt, dass lediglich die Öffnungen 311 zur Befettung vorgesehen werden. Es versteht sich, dass mehrere über den Umfang verteilte Öffnungen 311 vorgesehen sein können, deren Form rund, oval oder eckig sein kann. Die übrigen Federscheiben sind entsprechend den zuvor beschriebenen Figuren 1 bis 3 ausgestaltet.

### Bezugszeichenliste

- 1: Drehmomentübertragungseinrichtung
- 2: Drehachse
- 3: Scheibenteil
- 4: Schraube
- 5: Kurbelwelle
- 6: Federscheibe
- 7: Federscheibe
- 100: Drehmomentübertragungseinrichtung
- 103: Scheibenteil
- 106: Federscheibe
- 107: Federscheibe
- 108: Federscheibe
- 109: Federscheibe
- 110: Federscheibe
- 200: Drehmomentübertragungseinrichtung
- 211: Öffnung
- 300: Drehmomentübertragungseinrichtung
- 303: Scheibenteil
- D₀: Durchmesser
- D₁: Durchmesser
- D₂: Durchmesser

## Patentansprüche

1. Drehmomentübertragungseinrichtung (1, 100, 200, 300) mit einem drehfest mit einer Kurbelwelle (5) einer Brennkraftmaschine verbundenen axial elastischen Scheibenteil (5) und einem radial außerhalb drehfest an dem Scheibenteil (3, 103, 203, 303) aufgenommenen Übertragungsteil, wobei das Scheibenteil (3, 103, 203, 303) axial mit der Kurbelwelle (5) verspannt verbunden ist,
**dadurch gekennzeichnet, dass**
an beiden Seiten des Scheibenteils (3, 103, 203, 303) jeweils zumindest eine Federscheibe (6, 7, 106, 107, 108, 109, 11, 306, 307, 308, 309, 310, 312) vorgesehen ist.

2. Drehmomentübertragungseinrichtung (1, 100, 200, 300) nach Anspruch 1, **dadurch gekennzeichnet, dass** der Durchmesser (D₁, D₂) der Federscheiben (6, 7, 106, 107, 108, 109, 110, 306, 307, 308, 309, 310, 312) größer als der Durchmesser eines Aufnahmebereichs der Kurbelwelle (5) für das Scheibenteil (3, 103, 203, 303) ist.

3. Drehmomentübertragungseinächtung (1, 103, 203, 303) nach Anspruch 1 oder 2, **dadurch gekennzeichnet, dass** die Federscheiben (6, 7, 106, 107, 108, 109, 110, 306, 307, 308, 309, 310, 312) aus unterschiedlichem Material mit unterschiedlichen elastischen Eigenschaften hergestellt sind.

4. Drehmomentübertragungseinrichtung (1, 103, 203, 303) nach einem der Ansprüche 1 bis 3, **dadurch gekennzeichnet, dass** die Federscheiben (6, 7, 106, 107, 108, 109, 110, 306, 307, 310, 312) Tellerfedern sind.

5. Drehmomentübertragungseinrichtung (103, 303) nach einem der Ansprüche 1 bis 4, **dadurch gekennzeichnet, dass** zumindest an einer Seite des Scheibenteils (103, 303) mehrere Federscheiben (106, 107, 108, 109, 110, 306, 307, 308, 309, 310, 312) vorgesehen sind, wobei jede Federscheibe (108, 109, 110, 306, 307, 308, 309) gegenüber der näher am Scheibenteil angeordneten Federscheibe (106, 107, 109, 308, 309, 310, 312) einen kleineren Durchmesser aufweist.

6. Drehmomentübertragungseinrichtung (100, 300) nach einem der Ansprüche 1 bis 5, **dadurch gekennzeichnet, dass** zumindest zwei Federscheiben (106, 107, 108, 109, 110, 306, 307, 308, 309, 310, 312) unterschiedliche Dicke aufweisen.

7. Drehmomentübertragungseinrichtung (300) nach einem der Ansprüche 1 bis 6, **dadurch gekennzeichnet, dass** zwischen zwei Federscheiben (307, 312; 306, 310) und/oder zwischen dem Scheibenteil und einer Federscheibe ein nichtmetallisches elastisches Element angeordnet ist.

8. Drehmomentübertragungseinrichtung (200), 300) nach einem der Ansprüche 1 bis 7, **dadurch gekennzeichnet, dass** zumindest eine Federscheibe (308) und/oder das Scheibenteil (203) zumindest eine mit einer Schmier- oder Dämpfungskomponente zumindest teilweise befüllte Öffnung (211, 311) aufweist wobei die Öffnung (211, 311) von jeweils einer Federscheibe (6, 7, 306, 310, 307, 312) und/oder dem Scheibenteil axial verschlossen wird.

## Claims

1. Torque transmission device (1, 100, 200, 300) having an axially elastic disc part (3, 103, 203, 303) which is connected to a crankshaft (5) of an internal combustion engine for conjoint rotation therewith and having a transmission part which is held radially at the outside on the disc part (3, 103, 203, 303) for conjoint rotation therewith, the disc part (3, 103, 203, 303) being connected axially to the crankshaft (5) in a braced fashion, **characterized in that** at both sides of the disc part (3, 103, 203, 303) there is provided in each case at least one spring washer (6, 7, 106, 107, 108, 109, 110, 306, 307, 308, 309, 310, 312).

2. Torque transmission device (1, 100, 200, 300) according to Claim 1, **characterized in that** the diameter (D₁, D₂) of the spring washers (6, 7, 106, 107, 108, 109, 110, 306, 307, 308, 309, 310, 312) is larger than the diameter of a holding region of the crankshaft (5) for the disc part (3, 103, 203, 303).

3. Torque transmission device (1, 100, 200, 300) according to Claim 1 or 2, **characterized in that** the spring washers (6, 7, 106, 107, 108, 109, 110, 306, 307, 308, 309, 310, 312) are produced from different materials with different elastic properties.

4. Torque transmission device (1, 100, 200, 300) according to one of Claims 1 to 3, **characterized in that** the spring washers (6, 7, 106, 107, 108, 109, 110, 306, 307, 310, 312) are plate springs.

5. Torque transmission device (100, 300) according to one of Claims 1 to 4, **characterized in that** a plurality of spring washers (106, 107, 108, 109, 110, 306, 307, 308, 309, 310, 312) is provided at least at one side of the disc part (103, 303), with each spring washer (108, 109, 110, 306, 307, 308, 309) having a smaller diameter than the spring washer (106, 107, 109, 308, 309, 310, 312) arranged closer to the disc part.

6. Torque transmission device (100, 300) according to one of Claims 1 to 5, **characterized in that** at least two spring washers (106, 107, 108, 109, 110, 306, 307, 308, 309, 310, 312) have different thicknesses.

7. Torque transmission device (300) according to one of Claims 1 to 6, **characterized in that** a non-metallic elastic element is arranged between two spring washers (307, 312; 306, 310) and/or between the disc part and a spring washer.

8. Torque transmission device (200, 300) according to one of Claims 1 to 7, **characterized in that** at least one spring washer (308) and/or the disc part (203) has at least one opening (211, 311) at least partially filled with a lubricating or damping component, with the opening (211, 311) being axially closed off by in each case one spring washer (6, 7, 306, 310, 307, 312) and/or the disc part.

## Revendications

1. Dispositif de transmission d'un couple (1, 100, 200, 300) avec une partie de disque (3, 103, 203, 303) axialement élastique connectée de manière solidaire en rotation à un vilebrequin (5) d'un moteur à combustion interne, et une partie de transfert reçue radialement à l'extérieur de manière solidaire en rotation sur la partie de disque (3, 103, 203, 303), la partie de disque (3, 103, 203, 303) étant connectée de manière précontrainte axialement au vilebrequin (5),
**caractérisé en ce que**
des deux côtés de la partie de disque (3, 103, 203, 303) est à chaque fois prévu un disque de ressort (6, 7, 106, 107, 108, 109, 110, 306, 307, 308, 309, 310, 312).

2. Dispositif de transmission d'un couple (1, 100, 200, 300) selon la revendication 1, **caractérisé en ce que** le diamètre (D₁, D₂) des disques de ressort (6, 7, 106, 107, 108, 109, 110, 306, 307, 308, 309, 310, 312) est supérieur au diamètre d'une région de réception du vilebrequin (5) pour la partie de disque (3, 103, 203, 303).

3. Dispositif de transmission d'un couple (1, 100, 200, 300) selon la revendication 1 ou 2, **caractérisé en ce que** les disques de ressort (6, 7, 106, 107, 108, 109, 110, 306, 307, 308, 309, 310, 312) se composent d'un matériau différent avec des propriétés élastiques différentes.

4. Dispositif de transmission d'un couple (1, 100, 200, 300) selon l'une quelconque des revendications 1 à 3, **caractérisé en ce que** les disques de ressort (6, 7, 106, 107, 108, 109, 110, 306, 307, 310, 312) sont des ressorts Belleville.

5. Dispositif de transmission d'un couple (100, 300) selon l'une quelconque des revendications 1 à 4, **caractérisé en ce que** plusieurs disques de ressort (106, 107, 108, 109, 110, 306, 307, 308, 309, 310, 312) sont prévus sur au moins un côté de la partie de disque (103, 303), chaque disque de ressort (108, 109, 110, 306, 307, 308, 309) présentant un plus petit diamètre par rapport au disque de ressort (106, 107, 108, 109, 110, 306, 307, 308, 309, 310, 312) disposé plus près de la partie de disque.

6. Dispositif de transmission d'un couple (100, 300) selon l'une quelconque des revendications 1 à 5, **caractérisé en ce qu'**au moins deux disques de ressort (106, 107, 108, 109, 110, 306, 307, 308, 309, 310, 312) présentent des épaisseurs différentes.

7. Dispositif de transmission d'un couple (300) selon l'une quelconque des revendications 1 à 6, **caractérisé en ce qu'**un élément élastique non métallique est disposé entre deux disques de ressort (307, 312 ; 306, 310) et/ou entre la partie de disque et un disque de ressort.

8. Dispositif de transmission d'un couple (200, 300) selon l'une quelconque des revendications 1 à 7, **caractérisé en ce qu'**au moins un disque de ressort (308) et/ou la partie de disque (203) présente(nt) au moins une ouverture (211, 311) au moins en partie remplie d'un composant lubrifiant ou amortissant, l'ouverture (211, 311) étant fermée axialement par un disque de ressort respectif (6, 7, 306, 310, 307, 312) et/ou par la partie de disque.
